# EUROPEAN PATENT SPECIFICATION

(11) **EP 4 094 992 B1**
(45) Date of publication and mention of the grant of the patent: **22.10.2025**
(21) Application number: 22165551.7
(22) Date of filing: 30.03.2022
(51) Int. Cl.: B60R 3/02

(54) **ALL-IN-ONE VEHICLE RUNNING BOARD**
ALL-IN-ONE-FAHRZEUGTRITTBRETT
MARCHEPIED DE VÉHICULE TOUT-EN-UN

(30) Priority: 24.05.2021 CN 202110563482
(43) Date of publication of application: 30.11.2022
(73) Proprietor: Anhui Wollin International Co., Ltd., Wuhu City, Anhui 241001 (CN)
(72) Inventor: YE, Jinsong, Wuhu City, 241001 (CN); TENG, Qiang, Wuhu City, 241001 (CN); LIU, Quanfu, Wuhu City, 241001 (CN)
(74) Representative: Ran, Handong

(56) References cited:
- EP-A1- 3 524 475
- WO-A1-2017/176226
- CN-A- 113 787 968
- CN-U- 208 325 054
- US-A1- 2003 132 595
- US-A1- 2005 258 616
- US-A1- 2018 001 825

## Description

### Field of Invention

The invention relates to the technical field of vehicle running boards, and in particular, to an all-in-one vehicle running board.

### Background

Sport utility vehicles and pickup trucks have been gaining market share year by year. They have chastises having relatively high ground clearance, which makes it difficult for the elderly and children to enter and exit the vehicles. Running boards are generally added to provide assistance for entering and exiting vehicles. Existing auxiliary running boards available on markets include fixed type and rotatable type of running boards. The fixed auxiliary running board affects the appearance aesthetics of a vehicle and also affects the trafficability of the vehicle. The rotatable auxiliary running board avoids the above defects, but it is prone to get stuck during usage. Once stuck, the rotatable running board needs to be repaired before it can be used normally. In addition, the rotatable running board is mounted to the chassis in a two-point or three-point fashion, the mounting points are prone to loosen, resulting in frequent maintenance, short service lifetime and many inconveniences during use.

US2003132595A1 discloses a retractable running board assembly. The running board assembly comprises a running board corresponding to the preamble of claim 1 selectively extendable between a retracted position, which is close to the vehicle's frame, and a lower, laterally-outward extended position that facilitates easy entrance into and exit from the vehicle. A plurality of longitudinally spaced, selectively-actuated links connect the running board to the frame. A selectively-operable driving mechanism concertedly actuates each of the links to extend and retract the running board. When the driving mechanism is not operated, each link resists actuation and holds the running board in a fixed position relative to the frame.

EP3524475A1 describes a running board assembly for a motor vehicle, which comprises: a step having an elongated shape with a support surface; at least two mounting brackets connected to the step for mounting the step to an undercarriage of the vehicle; a mechanical protective shielding fixedly mounted to one of said mounting brackets.

WO2017176226A1 discloses a retractable running board comprising at least one supplementary step that facilitates getting in/out of a vehicle for the passengers. The running board comprises: at least one driving member supplying driving force; at least one drive shaft transferring the driving force to the running board; and at least two flanges helping the running board to be mounted in the vehicle.

US2018001825A1 discloses a compact deployable/retractable running board assembly for a motor vehicle including a running board, linkage coupled to the running board, and a motor assembly coupled to an actuator, the running board. The linkage includes a drive arm connected to a pivot shaft within a housing at a location on the pivot shaft between two bushings that are coupled to the pivot shaft within the housing. The linkage also includes an idler arm connected to a pivot shaft within an idler housing. The actuator is operably coupled to the linkage to cause rotation of the linkage to move the running board between at least one stowed position generally under the motor vehicle and at least one deployed position to provide a step surface for a user.

US2005258616A1 discloses a retractable running board assembly mounted to the frame of a vehicle. The running board is selectively extendable between a retracted position, which is close to the vehicle's frame, a lower, laterally-outward extended position that facilitates easy entrance into and exit from the vehicle and a roof-access position, higher and outward from the entrance position. A selectively-operable driving mechanism actuates a link to extend and retract the running board. When the driving mechanism is not operated, each link resists actuation and holds the running board in a fixed position relative to the frame.

CN208325054U discloses a retractable running board for a vehicle, including a running board, extending/retraction mechanism and a drive motor. The extending/retraction mechanism includes a fixing base, a drive swing arm, idler sliding arm and a connecting seat. The drive swing arm and the idler sliding arm rotationally connect to different positions of the connecting seat. The drive motor is used to drive the drive swing arm to rotate.

### Summary of Invention

The objective of the present invention is to provide an all-in-one vehicle running board, so as to solve the problems that installation of existing running boards tend to become loose because of their two-point or three-point mounting structures and are prone to get stuck, which leads to frequent maintenance and shortened product life. The invention is set out in the appended set of claims.

In order to solve the problems mentioned above, the present invention provides an all-in-one vehicle running board, which comprises a panel, a mounting part configured to connect to a vehicle body, and a transmission part configured to connect the panel with the mounting part. The transmission part is configured to drive the panel to extend or retract. The transmission part comprises at least two transmission mechanisms, one of which is provided with a drive mechanism. The mounting part comprises an integral mounting bracket configured to connect to the vehicle body and connection assemblies configured to connect the integral mounting bracket with the transmission mechanisms.

On the one hand, the vehicle running board is integrally mounted onto a lower body panel of the vehicle via the integral mounting bracket, such that the vehicle running board is stable in use and is easy to mount. On the other hand, the use of the main transmission mechanism in combination with the auxiliary transmission mechanism(s) prevents the running board from being stuck when the drive fails, allowing for more flexible and convenient use of the running board.

According to the invention, the transmission mechanism comprises: a first mounting base configured to connect to the connection assembly, a second mounting base configured to connect to the panel, and an oscillating arm configured to connect the first mounting base with the second mounting base. The oscillating arm is rotatably connected to the first mounting base through a first shaft, and is rotatably connected to the second mounting base through a second shaft.

Preferably the drive mechanism includes a drive motor. The transmission mechanism having the drive mechanism is a main transmission. A first shaft of the main transmission is an output shaft of the drive motor. The output shaft of the drive motor is relatively fixedly connected to the oscillating arm through a shaft fixing member. The drive motor is configured to drive the oscillating arm to perform a reciprocating rotational motion so as to drive the panel to extend or retract.

The oscillating arm is driven by the drive motor to perform a reciprocating rotational motion, so that the oscillating arm drives the panel to extend or retract to assist passengers to enter and exit the vehicle.

According to the invention, the first mounting base comprises a first base body connected to the connection assembly. A first side plate and a second side plate are provided on two adjacent or opposite sides above the first base body. A second base body is provided above the first and second side plates. The first base body and the second base body are arranged in parallel. The oscillating arm is rotatably connected between the first base body and the second base body through the first shaft.

The first side plate and the second side plate are adapted to limit the rotation of the oscillating arm. The degrees of the angle between the first side plate and the second side plate can be set as required to meet the needs of more occasions for running boards.

Preferably, cushion members are provided on the inner sides of the first side plate and the second side plate.

The cushion members are provided on the inner sides of the first side plate and the second side plate, in order to avoid noise and abrasion caused by collision when the oscillating arm is at the fully extended or retracted positions, thereby improving usage in comfort and reducing abrasion. Preferably, the panel comprises a panel body that has a slide rail at an end connected to the second mounting base. The second mounting base is provided with a slide groove configured to engage with the slide rail. A fastening member is provided at the engagement position.

The panel is connected with the second mounting base through the engagement of the slide rail and the slide groove. The panel's mounting arrangement can be adjusted depending on the vehicle model. After completion of the adjustment, the panel can be secured by the fastening member. The fastening member may be a bolt and nut arrangement, a rubber sticking member or other means for securing the panel.

Preferably, the panel body is provided with a light strip.

A light strip(s) is/are provided on the panel body to provide prompt for passengers to use the running board safely. The light strip can be arranged on the top of the body of the running board to make the prompt more conspicuous. The light strip can also be arranged under the body of the running board to illuminate the road that passengers are about to step on when they exit the vehicle, so as to prevent passengers from stepping on water or dirt.

Preferably, a light strip portion is provided on the panel body, which is configured to receive the light strip. A light strip protection bar is provided above the light strip. Top caps are provided on the top of both ends of the panel body, and corner guards are arranged on both ends of the panel.

When the light strip is positioned above the panel body, a light strip portion is provided on the panel body and the light strip is placed in the light strip portion. The light strip protection bar is then provided above the light strip to protect the light strip. The light strip protection bar can also provide improved comfort for passengers' eyes.

Preferably, the connection assembly comprises at least one vertical connection plate and one lateral connection plate. The vertical connection plate is vertically connected at one end to the lateral connection plate, and is connected to the integral mounting bracket at the other end. The lateral connection plate is connected to the first mounting base. The included angles at two mounting positions of the vertical connection plate are acute angles.

Adjustment of the angles of the two mounting positions of the vertical connection plate can meet various requirements for running boards. The use of the connection assemblies allow the running board to be more flexibly connected and easily adjusted.

Preferably, the output shaft of the drive motor is provided with a positioning groove. The shaft fixing member comprises a positioning block and a positioning screw. The oscillating arm of the main transmission has a positioning block portion at one side. When installed in the positioning block portion, the positioning block is also located in the positioning groove. The positioning screw is engaged with the positioning block at the other side of the oscillating arm.

A through hole is provided on the oscillating arm. The through hole has a large diameter on one end and a small diameter on the other end. The positioning block portion is arranged at the large diameter end. After being placed at the positioning block portion, the positioning block is just located in the positioning groove of the output shaft of the drive motor, and then passes through the through hole and is engaged with the positioning screw at the small diameter end, so that the drive motor is relatively fixedly connected to the oscillating arm of the main transmission.

Preferably, the cushion member comprises a damping base and a securing screw. The damping base is located on the inner side of the first side plate or the second side plate. The securing screw penetrates through the first side plate or the second side plate and is connected to the damping base. A damping pad is provided on the inner side of the damping base.

The damping base is movably connected to the first side plate or the second side plate through the securing screw. The damping base is provided with a damping pad on its inner side. Such connection enables the damping base to be easily and conveniently replaced and to offer better cushioning.

The present invention has advantages comprising the follows:
On the one hand, the vehicle running board can be integrally mounted onto the lower body panel of the vehicle via the integral mounting bracket conveniently and is stable in use. On the other hand, the use of the main transmission mechanism in combination with the auxiliary transmission mechanism(s) prevents the running board from being stuck when the drive mechanism fails, allowing for more flexible and convenient use of the running board.

The present invention will be described in detail below with reference to the accompanying drawings and embodiments.

### Brief Description of Drawings

Fig. 1 is a front view schematically illustrating an all-in-one vehicle running board;
Fig. 2 is an exploded view schematically illustrating a main transmission of a transmission mechanism;
Fig. 3 is a top view schematically illustrating a main transmission of a transmission mechanism;
Fig. 4 is an exploded view schematically illustrating an auxiliary transmission of a transmission mechanism;
Fig. 5 is a top view schematically illustrating an auxiliary transmission of a transmission mechanism; and
Fig. 6 is an exploded view schematically illustrating a panel of an all-in-one vehicle running board.

### List of reference signs:

1-panel; 2-mounting part; 3-transmission part; 4-transmission mechanism; 5-drive mechanism; 6-integral mounting bracket; 7-connection assembly; 8-first mounting base; 9-second mounting base; 10-oscillating arm; 11-first shaft; 12-second shaft; 13-drive motor; 14-shaft fixing member; 15-first base body; 16-first side plate; 17-second side plate; 18-second base body; 19-cushion member; 20-panel body; 21-slide rail; 22-slide groove; 23-fastening member; 24-light strip; 25-light strip protection bar; 26-top cap; 27-vertical connection plate; 28-lateral connection plate; 29-positioning groove; 30-positioning block; 31-positioning screw; 32-damping base; 33-securing screw; 34-damping pad.

### Detailed Description

The present invention will be described in detail below by way of examples. Those skilled in the art will appreciate that the following embodiments are only intended to illustrate the present invention, and should not be construed as limiting the scope of the present invention. If specific conditions are not indicated in the embodiments, the embodiments are to be understood as being carried out under conventional conditions or conditions suggested by the manufacturers. Reagents or devices used herein without manufacturers being specified are to be understood as conventional products available in the market. The particular embodiments described herein are only intended to illustrate the principle of the present invention, and not to limit the present invention.

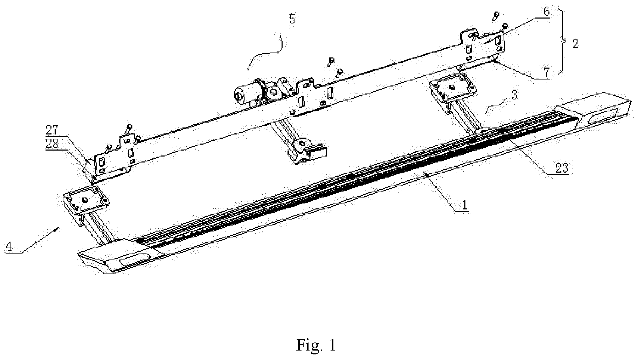

In order to address the problems that existing running boards tend to become loose from their mounting positions due to the two-point or three-point mounting manner and are prone to get stuck and result in frequent maintenance and shortened product life, the present invention provides an all-in-one vehicle running board as shown in Fig. 1. The all-in-one vehicle running board comprises a panel 1, a mounting part 2 configured to connect to a vehicle body, and a transmission part 3 configured to connect the panel 1 with the mounting part 2. The transmission part 3 is configured to drive the panel 1 to extend or retract. The transmission part 3 comprises at least two transmission mechanisms 4, one of which is provided with a drive mechanism 5. The mounting part 2 comprises an integral mounting bracket 6 configured to connect to the vehicle body and connection assemblies 7 configured to connect the integral mounting bracket 6 with the transmission mechanisms 4.

The at least two transmission mechanisms 4 ensure improved stability, and the two transmission mechanisms 4 are mounted on one integral mounting bracket 6 , which in turn is connected to the body of the vehicle. The integral mounting bracket 6 is easy to mount and has strong stability. When a part of the integral mounting bracket is loose, its overall stability in use would not be affected. When stability is affected, safety would not be affected, which provides sufficient time for re-adjustment and provides higher safety. The integral mounting bracket 6 is connected to the transmission mechanisms 4 through the connection assemblies 7. The connection assemblies 7 allow for adjustment of the angle or the deployed and stowed distances, so that the running board can be flexibly and conveniently operated and can be applied to vehicles of various models.

One of the at least two transmission mechanisms 4 is provided with a drive mechanism 5, referred to as a main transmission. A transmission mechanism 4 not provided with a drive mechanism 5 is referred to as an auxiliary transmission. The main transmission can be used with an auxiliary transmission. Alternatively, the main transmission can be used with an auxiliary transmission at each of its both sides. The latter is preferred, which is more stable. When the drive mechanism 5 is not working due to failure of its power, the panel 1 can be pulled to be extended or retracted, and the running board can be fixed for use. Running boards are arranged symmetrically on the left and right sides of the vehicle. On the one hand, the vehicle running board is integrally mounted onto the lower body panel of the vehicle via the integral mounting bracket 6, such that it is stable in use and is easy to mount. On the other hand, the use of the main transmission mechanism 4 in combination with the auxiliary transmission mechanism(s) 4 prevents the running board from being stuck when the drive mechanism 5 fails, allowing for more flexible and convenient use of the running board.

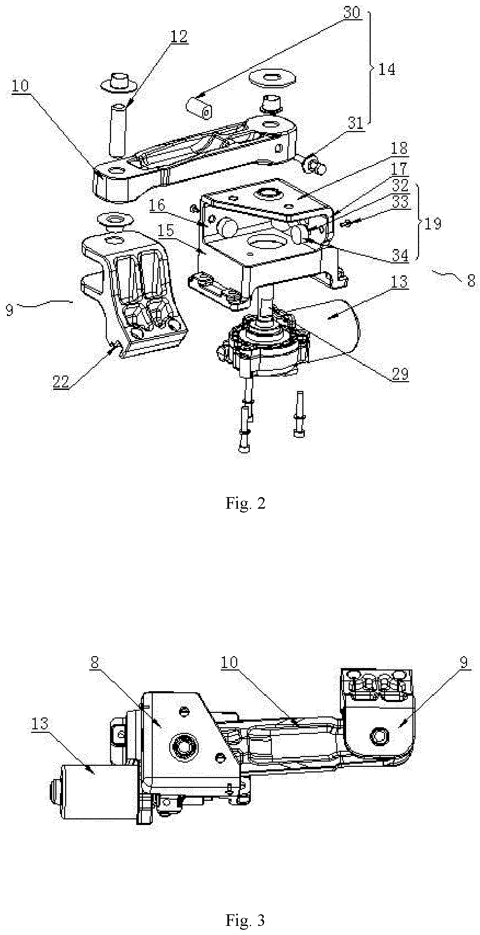

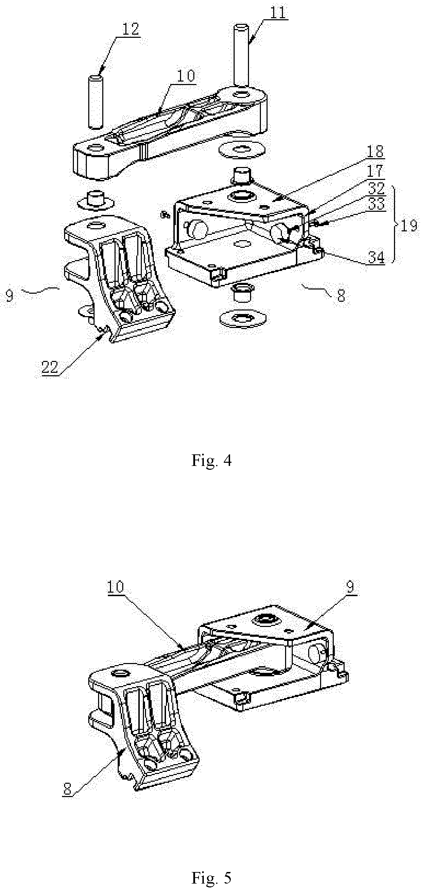

Figs. 2 to 5 schematically illustrates transmission mechanisms 4. The transmission mechanisms 4 include a main transmission and an auxiliary transmission(s). The main transmission is similar to the auxiliary transmission, with the addition of a drive mechanism 5. The transmission mechanism 4 includes: a first mounting base 8 connected to the connection assembly 7, a second mounting base 9 connected to the panel 1, and an oscillating arm 10 connecting the first mounting base 8 with the second mounting base 9. The oscillating arm 10 is rotatably connected to the first mounting base 8 through a first shaft 11, and is rotatably connected to the second mounting base 9 through a second shaft 12.

The drive mechanism 5 includes a drive motor 13. The drive motor 13 is connected to a gearbox. The drive motor 13 may be selected as an oscillating arm motor, and a common oscillating arm motor in the market can be selected depending on requirements. The transmission mechanism 4 having the drive mechanism 5 is a main transmission, and a first shaft 11 of the main transmission is an output shaft of the drive motor 13. The output shaft of the drive motor 13 is relatively fixedly connected to the oscillating arm 10 through a shaft fixing member 14. The drive motor 13 is configured to drive the oscillating arm 10 to perform a reciprocating rotational motion so as to drive the panel 1 to extend or retract.

The first shaft 11 and the first mounting base 8 may be connected via a shaft sleeve and a spacer, and the second shaft 12 and the second mounting base 9 may also be connected via a shaft sleeve and a spacer. The sleeves and spacers stabilize the rotational connection and increase the service lifetime of the running board. The spacer can be a tetrafluoroethylene spacer made of tetrafluoroethylene, which has self-lubricating function, is resistant to corrosion and high temperature and is cost effective.

The oscillating arm 10 is driven by the drive motor 13 to perform the reciprocating rotational motion, so that the oscillating arm 10 drives the panel 1 to extend or to retract so as to assist passengers in entering and exiting the vehicle.

The first mounting base 8 includes a first base body 15 connected to a connection assembly 7.

A first side plate 16 and a second side plate 17 are provided respectively on two adjacent or opposite sides above the first base body 15. A second base body 18 is provided above the first side plate 16 and the second side plate 17. The first base body 15 and the second base body 18 are arranged in parallel. The oscillating arm 10 is rotatably connected between the first base body 15 and the second base body 18 through the first shaft 11.

The first side plate 16 and the second side plate 17 are adapted to limit the rotation of the oscillating arm 10. The degrees of the angle between the first side plate 16 and the second side plate 17 can be set as required to meet the needs of more occasions for running boards. When used in a large vehicle such as an SUV or a bus, the panel 1 needs to be extended a large distance, resulting in a long extension and retraction course. At this point, it is appropriate that the angle between the first side plate 16 and the second side plate 17 is an obtuse angle, which can be adjusted depending on different vehicle models.

In order to increase stability, the drive motor 13 is connected to the first base body 15 through screws.

In order to avoid noise and abrasion caused by collision of the oscillating arm 10 with the first side plate 16 or the second side plate 17 when the oscillating arm is at the fully extended or retracted position, cushion members 19 are provided on inner sides of the first side plate 16 and the second side plate 17 to improve usage in comfort and reduce abrasion.

The cushion members 19 may be in various forms. Due to frequent collisions, the cushion members 19 are to be replaced regularly. Therefore, the cushion members 19 should have a stable structure, provide good cushioning effect, and be easy to mount or replace. Preferably, the cushion member 19 comprises a damping base 32 and a securing screw 33. The damping base 32 is located on the inner side of the first side plate 16 or the second side plate 17. The securing screw 33 penetrates through the first side plate 16 or the second side plate 17 and is connected to the damping base 32. A damping pad 34 is provided on the inner side of the damping base 32.

The damping base 32 is movably connected to the first side plate 16 or the second side plate 17 through the securing screw 33. The damping base 32 is provided with the damping pad 34 on its inner side. Such connection enables the damping base to be easily and conveniently replaced and to offer better cushioning. When the angle of the oscillating arm 10 needs to be fine-tuned, the fine-tune can also be implemented by adjusting the securing screw 33.

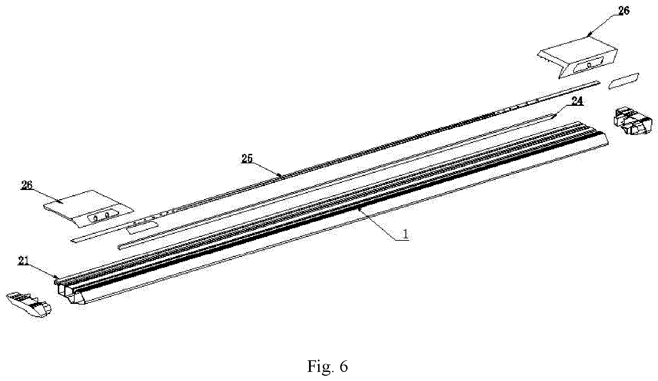

As shown in Fig. 6, the panel 1 comprises a panel body 20 that has a slide rail 21 at an end connected to the second mounting base 9. The second mounting base 9 is provided with a slide groove 22 configured to engage with the slide rail 21. A fastening member 23 is provided at the engagement position.

The panel 1 is connected to the second mounting base 9 through the engagement of the slide rail 21 and the slide groove 22. The panel's mounting can be adjusted depending on vehicle models. After completion of adjustment, the panel 1 can be secured by the fastening member 23. The fastening member 23 may be a bolt and nut arrangement, a rubber sticking member or other means for fastening the panel.

A light strip(s) 24 is/are provided on the panel body 20 to provide prompt for passengers to use the running board safely. The light strip 24 can be arranged on the top of the body 20 of the running board to make the prompt more conspicuous. The light strip 24 can also be arranged under the body 20 of the running board to illuminate the road that passengers are about to step on when they exit the vehicle, so as to prevent passengers from stepping on water or dirt.

When the light strip 24 is positioned above the panel body 20, a light strip portion is provided on the upper side of the panel body 20 to receive the light strip 24. A light strip protection bar 25 is then arranged above the light strip 24. The light strip protection bar 25 can additionally provide improved comfort for passengers' eyes. Top caps 26 are provided on the top of the panel body 20 at its both ends. Corner guards are arranged on both ends of the panel 1.

When the light strip 24 is positioned below the panel body 20, a light strip portion is arranged on the lower side of the panel body 20 and the light strip 24 is placed in the light strip portion. A light strip protection bar 25 is then provided below the light strip 24 for protecting the light strip 24.

The panel body 20 should provide sufficient load-bearing. The panel body 20 may be made of materials selecting from stainless steel or aluminum alloy. The light strip protection bar 25 can be a stainless steel bar hollow in the middle or a stainless steel bar inlaid with transparent glass or colored glass in the middle. The panel body 20, the light strip 24 and the light strip protection bar 25 are limited by the top caps 26 arranged on both sides, and then positioned by the corner guards on both sides of the panel 1 for installation. The corner guards are made of aluminum alloy or plastic, which has a tight fit.

The connection assemblies 7 allow for adjustment of the angle or the extended and retracted distances, so that the running board can be flexibly and conveniently operated and can be applied to vehicles of various models. The connection assembly 7 comprises at least one vertical connection plate 27 and one lateral connection plate 28. The vertical connection plate 27 is vertically connected at one end to the lateral connection plate 28, and is connected to the integral mounting bracket 6 at the other end. The lateral connection plate 28 is connected to the first mounting base 8. The included angles at the two mounting positions of the vertical connection plate 27 are acute angles.

The connection assembly 7 is fixed on both sides by means of screws. Adjustment of the angles of the two mounting positions of the vertical connection plate 27 can meet various requirements for running boards. The use of the connection assemblies allow the running board to be more flexibly connected and easily adjusted.

The output shaft of the drive motor 13 is provided with a positioning groove 29. The shaft fixing member 14 includes a positioning block 30 and a positioning screw 31. The oscillating arm 10 of the main transmission has a positioning block portion at one side. When installed in the positioning block portion, the positioning block 30 is also located in the positioning groove 29. The positioning screw 31 is engaged with the positioning block 30 at the other end of the oscillating arm 10.

A through hole is provided on the oscillating arm 10. The through hole has a large diameter on one end and a small diameter on the other end. The positioning block portion is arranged at the large diameter end. After being placed at the positioning block portion, the positioning block 30 is just located in the positioning groove 29 of the output shaft of the drive motor 13, and then pass through the through hole and is engaged with the positioning screw 31 at the small diameter end, so that the drive motor 13 is relatively fixedly connected to the oscillating arm 10 of the main transmission.

Operation Process: in installation, appropriate angles of the oscillating arm 10 and the connection assemblies 7 are selected according to requirements for using the running boards with respect to different vehicle models. Firstly, the transmission mechanisms 4 are installed. The first mounting base 8 is installed, wherein the first base body 15, the first side plate 16, the second side plate 17 and the second base body 18 are integrally formed or assembled together for installation. Cushion members 19 are mounted on the inner side of the first side plate 16 and second side plate 17. The oscillating arm 10 is connected to the first mounting base 8 through the first shaft 11, and the oscillating arm 10 is connected to the second mounting base 9 through the second shaft 12. The first shaft 11 for the transmission mechanism 4 provided with a drive mechanism 5 is replaced with the output shaft of the drive motor 13. The drive motor 13 is connected to the first base body 15 by bolts. Next, the first mounting bases 8 are connected to the integral mounting bracket 6 through connection assemblies 7. The second mounting base 9 is connected to the panel 1 through the snap connection of the slide rail. At last, the integral mounting bracket 6 is integrally mounted onto the bottom of the vehicle body.

When one entering or exiting a vehicle, the vehicle door is opened, the drive motor 13 is activated, and the oscillating arm 10 is driven by the drive motor 13 to rotate, so as to drive the panel 1 to be deployed from the bottom of the vehicle body. After the door is closed, the panel 1 is stowed to the bottom of the vehicle body.

In summary, the present invention provides an all-in-one vehicle running board, so as to solve the problems that existing running boards are easy to become loosen from their mounting positions due to the two-point or three-point mounting arrangements and are prone to get stuck and consequently result in frequent maintenance and shortened product life. On the one hand, the vehicle running board is integrally mounted onto the lower body panel of the vehicle via the integral mounting bracket 6, such that it is stable in use and is easy to mount. On the other hand, the use of the main transmission mechanism 4 in combination with the auxiliary transmission mechanism(s) 4 prevents the running board from being stuck when the drive mechanism 5 fails, allowing for more flexible and convenient use of the running board.

Specific features, structures, materials, or characteristics described in connection with terms used herein such as "an embodiment," "an example," or "a specific example" are intended to be comprised in at least one embodiment or example of the present invention. Reference to the above terms used herein do not necessarily refer to the same embodiment or example. Furthermore, the specific features, structures, materials, or characteristics described may be combined in any suitable manner in any one or more embodiments or examples.

The above preferred embodiments of the present invention are provided only to illustrate the present invention. The preferred embodiments do not describe all the details and are not intended to limit the invention. Apparently, modifications and variations are possible in the light of the content described herein. These embodiments are selected and described herein in order to better explain the principles and practical applications of the present invention, so that those skilled in the art can well understand and practice the present invention. The present invention is to be limited only by the claims and their whole scope and equivalents.

## Claims

1. An all-in-one vehicle running board, comprising:
a panel (1);
a mounting part (2) configured to connect to a vehicle body; and
a transmission part (3) configured to connect the panel (1) with the mounting part (2) and to drive the panel (1) to extend or retract,
wherein the transmission part (3) comprises at least two transmission mechanisms (4), one of which being provided with a drive mechanism (5); and
wherein the mounting part (2) comprises:
a single integral mounting bracket (6) configured to connect the vehicle running board to the vehicle body, and
connection assemblies (7) configured to connect the single integral mounting bracket (6) with the transmission mechanisms (4),
**characterized in that**:
the transmission mechanism (4) comprises:
a first mounting base (8) configured to connect to the connection assembly (7) and comprising: a first base body (15) connected to the connection assembly (7), a first side plate (16) and a second side plate (17) provided on two adjacent or opposite sides above the first base body (15), and a second base body (18) provided above the first side plate (16) and the second side plate (17), wherein the first base body (15) and the second base body (18) are arranged in parallel,
a second mounting base (9) configured to connect to the panel (1), and
an oscillating arm (10) configured to connect the first mounting base (8) with the second mounting base (9), the oscillating arm (10) rotatably connected to the first mounting base (8) and between the first base body (15) and the second base body (18) through a first shaft (11), and the oscillating arm (10) rotatably connected to the second mounting base (9) through a second shaft (12).

2. The all-in-one vehicle running board of claim 1, wherein:
the drive mechanism (5) includes a drive motor (13), the transmission mechanism (4) having the drive mechanism (5) is a main transmission, a first shaft (11) of the main transmission is an output shaft of the drive motor (13) and is relatively fixedly connected to the oscillating arm (10) through a shaft fixing member (14), and the drive motor (13) is configured to drive the oscillating arm (10) to perform a reciprocating rotational motion to drive the panel (1) to extend or retract.

3. The all-in-one vehicle running board of claim 1, wherein cushion members (19) are provided on inner sides of the first side plate (16) and the second side plate (17).

4. The all-in-one vehicle running board of claim 2, wherein:
the panel (1) comprises a panel body (20) having a slide rail (21) at an end connected to the second mounting base (9);
the second mounting base (9) is provided with a slide groove (22) configured to engage with the slide rail (21); and
a fastening member (23) is provided at an engagement position.

5. The all-in-one vehicle running board of claim 4, wherein a light strip (24) is provided on the panel body (20).

6. The all-in-one vehicle running board of claim 5, wherein:
a light strip portion is provided on the panel body (20) to receive the light strip (24),
a light strip protection bar (25) is provided above the light strip (24),
top caps (26) are provided on the top of both ends of the panel body (20), and
corner guards are arranged on both ends of the panel (1).

7. The all-in-one vehicle running board of claim 2, wherein:
the connection assembly (7) comprises at least one vertical connection plate (27) and one lateral connection plate (28), the vertical connection plate (27) vertically connected to the lateral connection plate (28) at one end and connected to the integral mounting bracket (6) at the other end, the lateral connection plate (28) connected to the first mounting base (8), wherein included angles at two mounting positions of the vertical connection plate (27) are acute angles.

8. The all-in-one vehicle running board of claim 2, wherein:
the output shaft of the drive motor (13) is provided with a positioning groove (29);
the shaft fixing member (14) comprises a positioning block (30) and a positioning screw (31); and
the oscillating arm (10) of the main transmission has a positioning block portion at one side,
wherein when installed in the positioning block portion, the positioning block (30) is also located in the positioning groove (29), and
wherein the positioning screw (31) is engaged with the positioning block (30) at the other end of the oscillating arm (10).

9. The all-in-one vehicle running board of claim 3, wherein:
the cushion member (19) comprises a damping base (32) and a securing screw (33), the damping base (32) located on an inner side of the first side plate (16) or the second side plate (17), the securing screw (33) extending through the first side plate (16) or the second side plate (17) and connected to the damping base (32); and
a damping pad (34) is provided on an inner side of the damping base (32).

## Patentansprüche

1. Allzweckfahrzeugtrittbrett, umfassend:
eine Leiste (1);
ein Montageteil (2) konfiguriert zum Verbinden mit einer Fahrzeugkarosserie; und
ein Getriebeteil (3) konfiguriert zum Verbinden der Leiste (1) mit dem Montageteil (2) und zum Antreiben der Leiste (1) zum Ausfahren oder Zurückziehen,
wobei das Getriebeteil (3) mindestens zwei Getriebemechanismen (4) umfasst, wobei einer derselben mit einem Antriebsmechanismus (5) versehen ist; und
wobei das Montageteil (2) Folgendes umfasst:
eine einzelne integrierte Montageleiste (6) konfiguriert zum Verbinden des Fahrzeugtrittbretts mit der Fahrzeugkarosserie, und
Verbindungsbaugruppen (7) konfiguriert zum Verbinden der einzelnen integrierten Montageleiste (6) mit den Getriebemechanismen (4),
**dadurch gekennzeichnet, dass**:
der Getriebemechanismus (4) Folgendes umfasst:
eine erste Montagebasis (8) konfiguriert zum Verbinden mit der Verbindungsbaugruppe (7) und Folgendes umfassend: einen ersten Basiskörper (15) verbunden mit der Verbindungsbaugruppe (7), eine erste Seitenplatte (16) und eine zweite Seitenplatte (17) bereitgestellt auf zwei nebeneinander oder einander gegenüberliegenden Seiten über dem ersten Basiskörper (15), und einen zweiten Basiskörper (18) bereitgestellt über der ersten Seitenplatte (16) und der zweiten Seitenplatte (17),
wobei der erste Basiskörper (15) und der zweite Basiskörper (18) parallel zueinander angeordnet sind, eine zweite Montagebasis (9) konfiguriert zum Verbinden mit der Leiste (1), und
einen oszillierenden Arm (10) konfiguriert zum Verbinden der ersten Montagebasis (8) mit der zweiten Montagebasis (9), wobei der oszillierende Arm (10) rotierbar mit der ersten Montagebasis (8) und zwischen dem ersten Basiskörper (15) und dem zweiten Basiskörper (18) über eine erste Welle (11) verbunden ist, und wobei der oszillierende Arm (10) rotierbar mit der zweiten Montagebasis (9) über eine zweite Welle (12) verbunden ist.

2. Allzweckfahrzeugtrittbrett nach Anspruch 1, wobei:
der Antriebsmechanismus (5) einen Antriebsmotor (13) einschließt, wobei der Getriebemechanismus (4), der den Antriebsmechanismus (5) aufweist, ein Hauptgetriebe ist, eine erste Welle (11) des Hauptgetriebes eine Ausgangswelle des Antriebsmotors (13) ist und am oszillierenden Arm (10) über ein Wellenbefestigungselement (14) relativ befestigt ist, und der Antriebsmotor (13) zum Antreiben des oszillierenden Arms (10) konfiguriert ist, um eine kolbenartige Rotationsbewegung durchzuführen, um die Leiste (1) zum Ausfahren oder Zurückziehen anzutreiben.

3. Allzweckfahrzeugtrittbrett nach Anspruch 1, wobei Dämpfungselemente (19) auf inneren Seiten der ersten Seitenplatte (16) und der zweiten Seitenplatte (17) bereitgestellt sind.

4. Allzweckfahrzeugtrittbrett nach Anspruch 2, wobei:
die Leiste (1) einen Leistenkörper (20) mit einer Gleitschiene (21) an einem mit der zweiten Montagebasis (9) verbundenen Ende umfasst;
die zweite Montagebasis (9) mit einer Gleitnut (22) versehen ist, die zum Einkoppeln mit der Gleitschiene (21) konfiguriert ist; und
ein Befestigungselement (23) an einer Einkopplungsposition bereitgestellt ist.

5. Allzweckfahrzeugtrittbrett nach Anspruch 4, wobei ein Leuchtstreifen (24) auf dem Leistenkörper (20) bereitgestellt ist.

6. Allzweckfahrzeugtrittbrett nach Anspruch 5, wobei:
ein Leuchtstreifenabschnitt auf dem Leistenkörper (20) zum Aufnehmen des Leuchtstreifens (24) bereitgestellt ist,
eine Leuchtstreifen-Schutzstange (25) über dem Leuchtstreifen (24) bereitgestellt ist,
obere Kappen (26) oben auf beiden Enden des Leistenkörpers (20) bereitgestellt sind, und Eckenschutzelemente an beiden Enden der Leiste (1) angeordnet sind.

7. Allzweckfahrzeugtrittbrett nach Anspruch 2, wobei:
die Verbindungsbaugruppe (7) mindestens eine vertikale Verbindungsplatte (27) und eine laterale Verbindungsplatte (28) umfasst, wobei die vertikale Verbindungsplatte (27) vertikal mit der lateralen Verbindungsplatte (28) an einem Ende verbunden ist und mit der integrierten Montageleiste (6) am anderen Ende verbunden ist, wobei die laterale Verbindungsplatte (28) mit der ersten Montagebasis (8) verbunden ist, wobei eingeschlossene Winkel an zwei Montagepositionen der vertikalen Verbindungsplatte (27) spitze Winkel sind.

8. Allzweckfahrzeugtrittbrett nach Anspruch 2, wobei:
die Ausgangswelle des Antriebsmotors (13) mit einer Positioniernut (29) versehen ist;
das Wellenbefestigungselement (14) einen Positionierblock (30) und eine Positionierschraube (31) umfasst; und
der oszillierende Arm (10) des Hauptgetriebes einen Positionierblockabschnitt an einer Seite aufweist,
wobei der Positionierblock (30) auch in der Positioniernut (29) platziert ist, wenn er im Positionierblockabschnitt installiert ist, und
wobei die Positionierschraube (31) in den Positionierblock (30) am anderen Ende des oszillierenden Arms (10) eingekoppelt ist.

9. Allzweckfahrzeugtrittbrett nach Anspruch 3, wobei:
das Dämpfungselement (19) eine Dämpfungsbasis (32) und eine Sicherungsschraube (33) umfasst, wobei die Dämpfungsbasis (32) auf einer inneren Seite der ersten Seitenplatte (16) oder der zweiten Seitenplatte (17) platziert ist, die Sicherungsschraube (33) durch die erste Seitenplatte (16) oder die zweite Seitenplatte (17) hindurch reicht und mit der Dämpfungsbasis (32) verbunden ist; und
ein Dämpfungspolster (34) an einer inneren Seite der Dämpfungsbasis (32) bereitgestellt ist.

## Revendications

1. Marchepied de véhicule tout-en-un, comportant :
un panneau (1) ;
une partie de montage (2) configurée pour être reliée à une carrosserie de véhicule ; et
une partie de transmission (3) configurée pour relier le panneau (1) à la partie de montage (2) et pour entraîner le panneau (1) à des fins d'extension ou de rétraction,
dans lequel la partie de transmission (3) comporte au moins deux mécanismes de transmission (4), dont l'un est doté d'un mécanisme d'entraînement (5) ; et
dans lequel la partie de montage (2) comporte :
un support de montage intégré unique (6) configuré pour relier le marchepied de véhicule à la carrosserie de véhicule, et
des ensembles de liaison (7) configurés pour relier le support de montage intégré unique (6) aux mécanismes de transmission (4),
**caractérisé en ce que** :
le mécanisme de transmission (4) comporte :
une première base de montage (8) configurée pour être reliée à l'ensemble de liaison (7) et comportant : un premier corps de base (15) relié à l'ensemble de liaison (7), une première plaque latérale (16) et une deuxième plaque latérale (17) mises en œuvre sur deux côtés adjacents ou opposés au-dessus du premier corps de base (15), et un deuxième corps de base (18) mis en œuvre au-dessus de la première plaque latérale (16) et de la deuxième plaque latérale (17), dans lequel le premier corps de base (15) et le deuxième corps de base (18) sont agencés en parallèle,
une deuxième base de montage (9) configurée pour se relier au panneau (1), et
un bras oscillant (10) configuré pour relier la première base de montage (8) à la deuxième base de montage (9), le bras oscillant (10) étant relié de manière rotative à la première base de montage (8) et entre le premier corps de base (15) et le deuxième corps de base (18) par le biais d'un premier arbre (11), et le bras oscillant (10) étant relié de manière rotative à la deuxième base de montage (9) par le biais d'un deuxième arbre (12).

2. Marchepied de véhicule tout-en-un selon la revendication 1, dans lequel :
le mécanisme d'entraînement (5) comprend un moteur d'entraînement (13), le mécanisme de transmission (4) ayant le mécanisme d'entraînement (5) est une transmission principale, un premier arbre (11) de la transmission principale est un arbre de sortie du moteur d'entraînement (13) et est relié de manière relativement fixe au bras oscillant (10) par le biais d'un élément de fixation d'arbre (14), et le moteur d'entraînement (13) est configuré pour entraîner le bras oscillant (10) afin qu'il effectue un mouvement de rotation alternatif pour entraîner le panneau (1) à des fins d'extension ou de rétraction.

3. Marchepied de véhicule tout-en-un selon la revendication 1, dans lequel des éléments amortisseurs (19) sont mis en œuvre sur des côtés intérieurs de la première plaque latérale (16) et de la deuxième plaque latérale (17).

4. Marchepied de véhicule tout-en-un selon la revendication 2, dans lequel :
le panneau (1) comporte un corps de panneau (20) ayant un rail coulissant (21) au niveau d'une extrémité reliée à la deuxième base de montage (9) ;
la deuxième base de montage (9) est dotée d'une rainure coulissante (22) configurée pour venir se mettre en prise avec le rail coulissant (21) ; et
un élément de fixation (23) est mis en œuvre au niveau d'une position de mise en prise.

5. Marchepied de véhicule tout-en-un selon la revendication 4, dans lequel une bande lumineuse (24) est mise en œuvre sur le corps de panneau (20).

6. Marchepied de véhicule tout-en-un selon la revendication 5, dans lequel :
une partie pour bande lumineuse est mise en œuvre sur le corps de panneau (20) pour recevoir la bande lumineuse (24),
une barre de protection de bande lumineuse (25) est mise en œuvre au-dessus de la bande lumineuse (24),
des caches supérieurs (26) sont mis en œuvre sur la partie supérieure des deux extrémités du corps de panneau (20), et
des protections d'angle sont agencées au niveau des deux extrémités du panneau (1).

7. Marchepied de véhicule tout-en-un selon la revendication 2, dans lequel :
l'ensemble de liaison (7) comporte au moins une plaque de liaison verticale (27) et une plaque de liaison latérale (28), la plaque de liaison verticale (27) étant reliée verticalement à la plaque de liaison latérale (28) au niveau d'une extrémité et étant reliée au support de montage intégré (6) au niveau de l'autre extrémité, la plaque de liaison latérale (28) étant reliée à la première base de montage (8), dans lequel les angles inclus au niveau de deux positions de montage de la plaque de liaison verticale (27) sont des angles aigus.

8. Marchepied de véhicule tout-en-un selon la revendication 2, dans lequel :
l'arbre de sortie du moteur d'entraînement (13) est doté d'une rainure de positionnement (29) ;
l'élément de fixation d'arbre (14) comporte un bloc de positionnement (30) et une vis de positionnement (31) ; et
le bras oscillant (10) de la transmission principale a une partie de bloc de positionnement au niveau d'un côté,
dans lequel, quand il est installé dans la partie de bloc de positionnement, le bloc de positionnement (30) est également situé dans la rainure de positionnement (29), et
dans lequel la vis de positionnement (31) est mise en prise avec le bloc de positionnement (30) au niveau de l'autre extrémité du bras oscillant (10).

9. Marchepied de véhicule tout-en-un selon la revendication 3, dans lequel :
l'élément amortisseur (19) comporte une base d'amortissement (32) et une vis de fixation (33), la base d'amortissement (32) étant située sur un côté intérieur de la première plaque latérale (16) ou de la deuxième plaque latérale (17), la vis de fixation (33) s'étendant au travers de la première plaque latérale (16) ou de la deuxième plaque latérale (17) et étant reliée à la base d'amortissement (32) ; et
un tampon d'amortissement (34) est mis en œuvre sur un côté intérieur de la base d'amortissement (32).
